# FASCICULE DE BREVET EUROPEEN

(11) **EP 3 130 841 B1**
(45) Date de publication et mention de la délivrance du brevet: **07.11.2018**
(21) Numéro de dépôt: 16181263.1
(22) Date de dépôt: 28.09.2009
(51) Int. Cl.: F21S 41/00, F21Y 115/10

(54) **DISPOSITIF D'ÉCLAIRAGE ADAPTATIF POUR VÉHICULE AUTOMOBILE**
ADAPTIVE BELEUCHTUNGSVORRICHTUNG FÜR KRAFTFAHRZEUG
ADAPTIVE LIGHTING DEVICE FOR A MOTOR VEHICLE

(30) Priorité: 29.09.2008 FR 0805356
(43) Date de publication de la demande: 15.02.2017
(62) Demande divisionnaire de: 09171453.5
(73) Titulaire: VALEO VISION, 93012 Bobigny Cedex (FR)
(72) Inventeur: ALBOU, Pierre, 75013 PARIS (FR); REISS, Benoit, 95580 MAGENCY (FR); SANCHEZ, Vanesa, 92270 BOIS COLOMBES (FR)

(56) Documents cités:
- EP-A- 2 037 167
- DE-A1-102006 052 749
- FR-A- 2 811 621
- JP-A- 2008 037 240

## Description

L'invention se rapporte à un dispositif d'éclairage pour véhicule automobile destiné à produire un faisceau lumineux adaptatif formant des pixels activables individuellement.

L'invention se rapporte plus particulièrement à un dispositif d'éclairage adaptatif pour véhicule automobile qui comporte :
- une pluralité de sources lumineuses principales sélectivement activables qui sont agencées selon un alignement transversal, deux sources lumineuses principales adjacentes étant écartées transversalement ;
- des moyens optiques de projection qui sont agencés de manière à projeter une image à l'infini de chaque source lumineuse principale, les images formant des pixels présentant chacun au moins un bord net, les pixels étant disjoints et alignés transversalement, deux pixels adjacents étant séparés transversalement par un intervalle sombre ;

Un tel dispositif d'éclairage est déjà connu pour éclairer la route avec une fonction dite « feu de route ». Un feu de route permet d'éclairer la route sur toute sa largeur ainsi que sur les bas côtés, sur une grande distance en avant du véhicule automobile.

D'autres véhicules automobiles, appelés par la suite « véhicules adverses », sont susceptibles de rouler sur la même route que ledit véhicule comportant le dispositif d'éclairage à pixels. Les véhicules adverses roulent soit dans le même sens que le véhicule automobile, soit dans un sens inverse.

Par la suite lorsque le terme « véhicule automobile » est employé sans autres précisions, il s'agit du véhicule équipé du dispositif d'éclairage adaptatif selon l'invention.

Lorsque des véhicules adverses roulent sur cette route, le faisceau lumineux peut être commandé afin que les pixels dits « interférents », c'est-à-dire les pixels qui sont susceptibles d'éblouir les conducteurs des autres véhicules, soient éteints. Ainsi un trou d'obscurité est créé dans le faisceau lumineux afin de ne pas éblouir le conducteur d'un véhicule adverse.

Cependant, lorsque le véhicule adverse est situé à cheval sur plusieurs pixels voisins, lesdits pixels voisins doivent tous être éteints.

Lorsque le véhicule ne fait qu'effleurer un pixel voisin, ledit pixel voisin doit tout de même être éteint pour éviter tout risque d'éblouissement. Cependant, une grande partie de la route se retrouve alors dans l'obscurité.

En outre, les pixels sont disjoints. Le conducteur du véhicule perçoit donc un éclairage non homogène divisé par une grille sombre. Or, les projecteurs classiques émettant des feux de route présentent un éclairage homogène qui s'estompe transversalement sur les côtés. Par projecteur classique, on comprendra par exemple un projecteur comportant une lampe à filament ou à arc et un réflecteur.

Cette différence sensible entre un feu de route classique et un feu de route « à pixels » est susceptible de perturber le conducteur du véhicule automobile et, ainsi, de dégrader le confort de conduite du véhicule automobile.

JP 2008-37.240 divulgue un dispositif selon le préambule de la revendication 1. Ainsi, notamment pour permettre un éclairage optimal pour un confort de conduite accru, l'invention propose un dispositif selon la revendication 1.

Selon d'autres caractéristiques de l'invention :
- l'intervalle sombre présente une dimension transversale inférieure à la moitié de la dimension transversale de l'un des pixels adjacents à cet intervalle sombre ;
- l'intervalle sombre présente une dimension transversale inférieure au quart de la dimension transversale de l'un des pixels adjacents à cet intervalle sombre ;
- le dispositif d'éclairage comporte une unique source lumineuse de transition dont l'image de transition est superposée à la totalité des pixels de l'alignement en éclairant entièrement la totalité des intervalles sombres ;
- l'unique image de transition s'estompe transversalement au-delà des pixels d'extrémité transversale de part et d'autre de l'alignement de pixels ;
- le dispositif d'éclairage comporte au moins deux sources lumineuses de transition produisant des images de transition alignées transversalement dont chacune éclaire entièrement au moins un intervalle sombre associé, les bords adjacents de deux images de transition adjacentes s'estompent totalement dans un pixel commun ;
- le dispositif d'éclairage comporte au moins autant de sources lumineuses de transition que d'intervalles sombres de manière que l'image de transition de chaque source lumineuse de transition éclaire un intervalle sombre associé, les bords adjacents de deux images de transition adjacentes s'estompant totalement sur un pixel commun agencé entre les deux intervalles sombres associés auxdites deux images de transition adjacentes ;
- les images de transition d'extrémité transversale s'estompent transversalement au-delà du pixel d'extrémité transversal associé ;
- le dispositif d'éclairage comporte deux sources lumineuses complémentaires qui sont associées à des moyens de projection de manière à former des images d'extrémité qui éclairent chacune dans le prolongement d'une extrémité transversale de l'alignement de pixels en chevauchant le pixel d'extrémité transversal associé et en s'estompant transversalement vers l'extérieur ;
- les moyens de projection associés des sources lumineuses de transition sont formés par les moyens de projection associés aux sources lumineuses principales ;
- les moyens de projections associés aux sources lumineuses de transition sont au moins en partie distincts des moyens de projection associés aux sources lumineuses principales ;
- les moyens de projection associés aux sources lumineuses complémentaires sont formés par les moyens de projection associés aux sources lumineuses de transition ;
- les moyens de projection sont formés par au moins une lentille ;
- les moyens de projection sont formés par au moins un miroir ;
- les moyens de projection sont formés par un ensemble constitué d'au moins un miroir et une lentille
- une lentille individuelle est associée à chacune des sources lumineuses principales.
- un miroir individuel est associé à chacune des sources lumineuses principales.
- un ensemble individuel comportant au moins un miroir et une lentille est associé à chacune des sources lumineuses principales.
- l'image de transition et/ou l'image d'extrémité est floue.
- l'image de transition et/ou l'image d'extrémité est nette.

D'autres caractéristiques et avantages apparaîtront au cours de la lecture de la description détaillée qui va suivre pour la compréhension de laquelle on se reportera aux dessins annexés parmi lesquels :
- la figure 1 est une vue schématique de dessus qui représente un dispositif d'éclairage adaptatif à pixels réalisé selon l'état de la technique qui éclaire un écran ;
- la figure 2 est une vue de face qui représente l'image produite par le dispositif d'éclairage de la figure 1 sur l'écran ;
- la figure 3 est un graphique qui représente l'éclairement lumineux de l'écran en lux en fonction de la position transversale sur l'écran le long d'une ligne transversale qui coupe les pixels ;
- la figure 4 est une vue similaire à celle de la figure 1 qui représente un dispositif d'éclairage adaptatif non revendiqué qui comporte des sources lumineuses de transition et des sources lumineuses complémentaires ;
- la figure 5 est une vue similaire à celle de la figure 2 qui représente l'image produite par le dispositif d'éclairage de la figure 4 sur l'écran ;
- la figure 6 est un graphique similaire à celui de la figure 3 qui représente l'éclairement lumineux, en lux, des pixels de la figure 5 le long d'une ligne de coupe transversale ;
- la figure 7 est un graphique qui représentant l'éclairement lumineux, en lux, des images de transition et des images d'extrémité le long de la ligne transversale de coupe avec la même échelle et la même origine que le graphique de la figure 6 ;
- la figure 8 est une vue similaire à celle de la figure 4 qui représente le dispositif d'éclairage réalisé selon un deuxième mode de réalisation;
- la figure 9 est une vue similaire à celle de la figure 5 qui représente l'image produite par un dispositif d'éclairage réalisé selon une variante.

Dans la suite de la présente description :
- des éléments ayant des fonctions similaires, analogues ou identiques seront désignés par des mêmes numéros de référence,
- on adoptera à titre non limitatifs des orientations longitudinale dirigée d'arrière en avant, verticale dirigée de haut en bas et transversale qui sont indiquées par le trièdre « L,V,T » des Figures,
- on comprendra les termes « chevaucher » et « superposer » appliqués à deux images lumineuses comme étant l'éclairage d'une surface commune par les deux images,
- on qualifiera de « transversal » un alignement d'images s'étendant selon une direction contenue dans un plan normal à l'axe du véhicule, quelle que soit l'orientation de cet alignement dans ce plan, horizontale, verticale ou oblique, et
- on qualifiera d'« adjacents » des éléments voisins, qu'ils soient attenants, disjoints ou même qu'ils se recouvrent légèrement

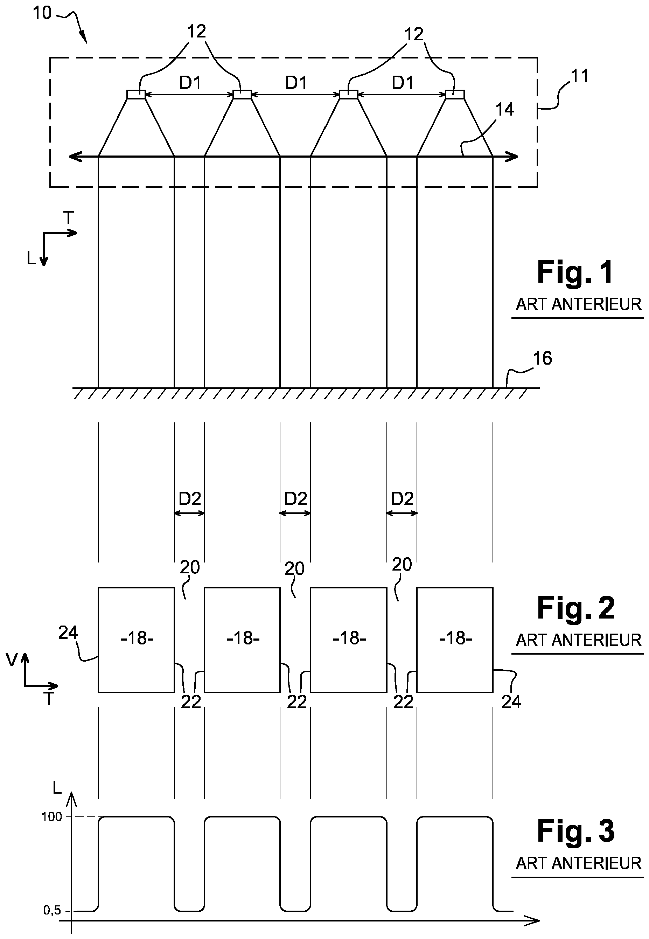

On a représenté à la figure 1 un dispositif d'éclairage 10 pour véhicule automobile qui est réalisé selon l'état de la technique. Le dispositif d'éclairage 10 est destiné à produire un faisceau lumineux adaptatif selon une direction longitudinale orientée vers l'avant. Le faisceau lumineux ainsi produit est plus particulièrement destiné à remplir une fonction de feu de route, c'est-à-dire qu'il éclaire la route sur toute sa largeur ainsi que les bas-côtés sur une grande distance en avant du véhicule, par exemple supérieure à 100 m.

Le dispositif d'éclairage 10 est généralement enfermé dans un boîtier 11 fermé vers l'avant par une glace transparente.

Le dispositif d'éclairage 10 comporte une pluralité de sources lumineuses principales 12 qui sont agencées selon un alignement transversal. Chaque source lumineuse principale est formée par une diode électroluminescente 12 qui présente une surface éclairante orientée vers l'avant.

Le dispositif d'éclairage comporte ici quatre sources lumineuses principales 12 qui sont identiques entre elles. La surface éclairante présente une forme rectangulaire de grand côté vertical et de petit côté transversal.

Les dimensions de la surface éclairante sont très réduites, par exemple de moins de 1 mm de côté.

Chaque diode électroluminescente principale 12 est portée par une carte à circuit imprimé (non représentée) individuelle comportant des moyens électroniques de commande de l'activation de ladite diode électroluminescente principale 12. Chaque source lumineuse principale 12 est ainsi activable sélectivement et individuellement.

Une source lumineuse principale 12 activée produit de la lumière tandis qu'une source lumineuse principale 12 désactivée est éteinte.

En variante, les diodes électroluminescentes principales sont montées sur une carte à circuit imprimée commune (non représentée), chaque diode électroluminescente principale étant activable sélectivement et individuellement.

Les surfaces éclairantes de deux sources lumineuses principales 12 adjacentes sont écartées transversalement d'une distance « D1 » très faible par rapport aux dimensions de leur surface éclairante, par exemple de l'ordre de 0,1 mm, c'est-à-dire dix fois plus petite que la longueur d'un côté de la surface éclairante. A cet égard, on remarquera que les figures 1, 4 et 7 ne sont pas réalisées à l'échelle afin de permettre une meilleure compréhension de la structure du dispositif d'éclairage.

Cette distance « D1 » est notamment prévue de manière que chaque source lumineuse principale 12 puisse être activée indépendamment des autres, en évitant que l'activation d'une des sources lumineuses principales 12 ne provoque l'activation involontaire des sources lumineuses principales 12 adjacentes par effet de champ.

Le dispositif d'éclairage 10 comporte aussi des moyens optiques de projection 14 qui sont agencés longitudinalement en avant des sources lumineuses. Les moyens de projection sont ici formés par une lentille principale 14 commune à toutes les sources lumineuses principales 12.

La lentille 14 est agencée longitudinalement en avant des sources lumineuses principales 12. La lentille 14 est agencée et conformée de manière à projeter, selon l'axe optique, une image nette à l'infini de chaque source lumineuse principale 12. Chaque source lumineuse principale 12 est plus particulièrement agencée dans le plan focal de la lentille 14 associée.

Chaque source lumineuse principale 12 participe ainsi à former une partie du faisceau lumineux de route.

Dans la pratique, l'image à l'infini est contrôlée, selon les normes européennes, par projection sur un écran 16 vertical transversal agencé longitudinalement en avant à une distance de 25 m du dispositif de projection 10.

On a représenté à la figure 2 l'image formée sur l'écran 16 lorsque toutes les sources lumineuses principales 12 sont actives. L'image de chaque source lumineuse principale 12 forme un pixel 18 qui peut être allumé ou éteint sélectivement à volonté par activation ou désactivation de la source lumineuse principale 12 correspondante.

Chaque pixel 18 présente une forme rectangulaire qui est l'image de la forme de la surface éclairante de la source lumineuse principale 12 associée. Un pixel proche de l'axe optique de la lentille présente par exemple une dimension de l'ordre de la dizaine de centimètres de côté.

Les pixels 18 sont ici tous identiques en formes et en dimensions.

En variante non représentée de l'invention, les pixels 18 peuvent présenter des formes et des dimensions différentes en fonction de leur position transversale par rapport à l'axe de la route. Les pixels proches de l'axe de la route présentent par exemple des dimensions transversales inférieures à celles des pixels excentrés de manière que la densité de pixels soit plus grande dans l'axe que sur les côtés.

Les pixels 18 sont disjoints les uns des autres et ils sont alignés transversalement. Ainsi, le faisceau lumineux de route est formé par la juxtaposition de faisceaux lumineux élémentaires dont chacun est formé par une source lumineuse principale 12 associée.

Deux pixels adjacents 18 sont séparés transversalement par un intervalle sombre 20. Chaque pixel 18 est délimité transversalement par deux bords 22 nets. Ainsi, les intervalles sombres 20 sont délimités transversalement très nettement par les bords 22 en vis-à-vis des deux pixels 18 qui l'encadrent.

Chaque intervalle sombre 20 présente par exemple une dimension transversale « D2 » de l'ordre du centimètre, et pouvant même être égale à 0,25 cm dans certains cas. Chaque intervalle sombre 20 est en fait l'image de l'écartement « D1 » entre la surface éclairante de deux sources lumineuses principales 12 adjacentes. Généralement, l'intervalle sombre 20 présente une dimension transversale D2 inférieure à la moitié de la dimension transversale de l'un des pixels adjacents 18 à cet intervalle sombre. Préférentiellement, cet intervalle sombre 20 présente une dimension transversale D2 inférieure au quart de la dimension transversale de l'un des pixels adjacents 18 à cet intervalle sombre.

En outre, les pixels 18 d'extrémité transversale sont délimités transversalement vers l'extérieur de l'alignement par un bord extérieur 24 qui est lui aussi très net.

Par le terme « net », on comprendra qu'un observateur situé à une distance de 25 m de l'écran 16 ne discerne pas de flou et qu'il perçoit les bords 22, 24 comme des lignes claires.

On comprendra que le terme « extérieur » est employé pour définir une orientation transversalement tournée dans un sens opposé à l'alignement de pixels 18 en partant d'un des pixels 18 d'extrémité.

Selon les normes en vigueur, les sources lumineuses principales 12 sont par exemple choisies de manière que chaque pixel 18 délivre un éclairement lumineux compris en 50 et 100 lux, tandis que chaque intervalle sombre 20 présente un éclairement lumineux inférieur à 1 lux. Dans l'exemple représenté à la figure 3, chaque pixel 18 délivre un éclairement lumineux de 100 lux.

Sur la figure 3, les fronts montants et descendants des pixels ont été représentés comme verticaux, ce qui correspond à une netteté absolue des bords des pixels. En pratique, les bords de ces pixels peuvent ne pas être aussi tranchés, de sorte que les fronts montants et descendants sont légèrement inclinés par rapport à la verticale.

L'activation et la désactivation des sources lumineuses principales 12 est commandée par un système (non représenté) de détection de véhicules adverses qui est embarqué à bord du véhicule. De tels systèmes de détection sont bien connus et ne seront pas détaillés par la suite. Il s'agit par exemple d'un système de détection qui comporte des moyens de prise d'image de la route et des moyens de traitement de ladite image.

Lors de l'utilisation du dispositif d'éclairage 10, toutes les sources lumineuses principales 12 sont activées de manière à allumer la totalité des pixels 18 pour éclairer la route sur toute sa largeur.

Lorsqu'un véhicule adverse est détecté comme étant éclairé par un pixel 18 dit « interfèrent », le système de détection commande la désactivation de la source lumineuse principale 12 associée au pixel 18 interférent. Le pixel interférent 18 est ainsi éteint de manière à ne pas éblouir le conducteur du véhicule adverse. Un trou d'obscurité est ainsi créé dans le faisceau lumineux de route de manière que la zone de la route comportant le véhicule adverse soit laissée dans l'obscurité tandis que le reste de la route est éclairé par les autres pixels 18 qui sont restés allumés.

Lorsqu'un véhicule adverse est détecté comme étant compris dans un intervalle sombre 20, le système considère que le véhicule adverse chevauche deux pixels adjacents 18. Les deux pixels 18 interférents sont alors éteints.

On a constaté que le fait d'éteindre deux pixels adjacents 18 provoquait un trou d'obscurité très large privant d'éclairage une grande partie de la route alors que le véhicule adverse est susceptible de n'occuper qu'une tranche transversale de faible épaisseur du trou d'obscurité.

De plus, l'éclairage en pixels 18 disjoints en forme de grille n'est pas homogène.

Pour résoudre ces problème, l'invention propose un dispositif d'éclairage 26 adaptatif qui présente la plupart des caractéristiques décrites pour le dispositif d'éclairage 10 réalisé selon l'état de la technique. Pour simplifier la compréhension de l'invention, seules les caractéristiques différentes du dispositif d'éclairage 10 selon l'état de la technique seront détaillées par la suite.

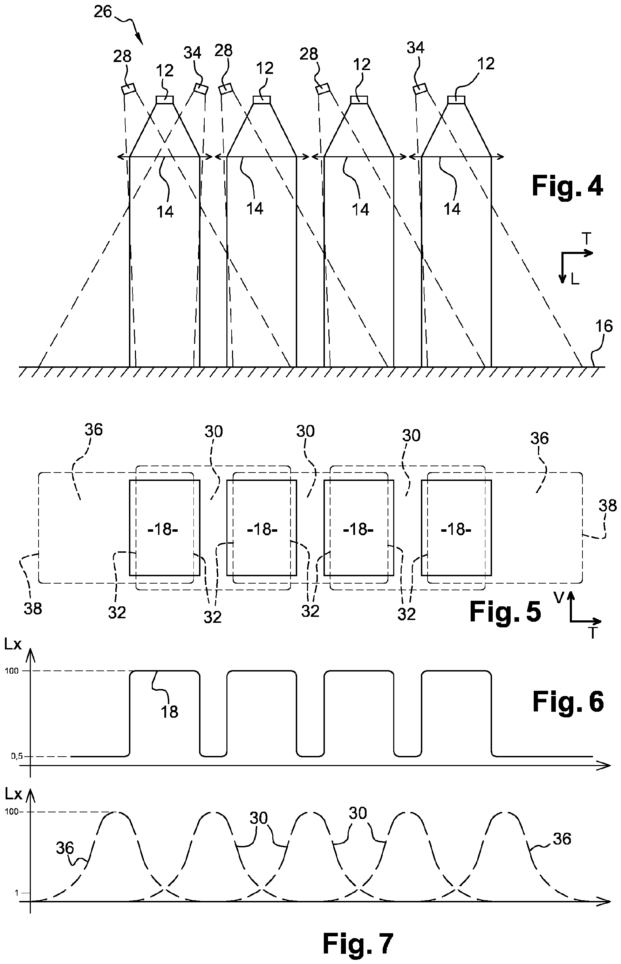

Dans ce premier mode de réalisation représenté aux figures 4 à 7, les moyens de projection 14 des images des sources lumineuses principales 12 sont formés par des lentilles individuelles 14 dont chacune est associée à une source lumineuse principale 12 pour former un pixel 18.

Le dispositif d'éclairage 26 comporte au moins une source lumineuse de transition 28 qui est associée des moyens optiques de projection pour projeter à l'infini une image 30 de transition entre deux pixels 18.

Chaque image de transition 30 est projetée de manière à éclairer entièrement au moins un intervalle sombre 20 en chevauchant les pixels adjacents 18 audit intervalle sombre 20.

En outre, chaque source lumineuse de transition 28 est susceptible d'être activée sélectivement et individuellement.

Dans le premier mode de réalisation représenté à la figure 4, le dispositif d'éclairage 26 comporte autant de sources lumineuses de transition 28 que d'intervalles sombres 20 dans l'alignement de pixels 18. Ainsi, chaque image de transition 30 est susceptible d'éclairer un unique intervalle sombre 20 associé.

Le nombre d'intervalles sombres 20 est égal au nombre de sources lumineuses principales 12 diminué d'une unité. Le dispositif d'éclairage 26 comporte donc trois sources lumineuses de transition 28 qui sont susceptibles de produire trois images de transition 30 dont chacune éclaire un intervalle sombre 20 associé.

Les sources lumineuses de transition 28 sont chacune formées par une diode électroluminescente de transition 28 qui est similaire à une diode électroluminescente principale 12. Ainsi, chaque source lumineuse de transition 28 présente une surface éclairante de forme rectangulaire de grand côté vertical.

Les moyens de projection associés aux sources lumineuses de transition 28 sont avantageusement formés par les moyens de projection 14 associés aux sources lumineuses principales 12. Ainsi, chaque source lumineuse de transition 28 est agencée longitudinalement en arrière d'une lentille 14 associée du dispositif d'éclairage 26. Ainsi, le dispositif d'éclairage 26 comporte peu d'éléments optiques et il est peu onéreux à fabriquer.

Lorsque l'on désire que les images de transition 30 soient floues, pour obtenir le flou désiré ainsi que le positionnement désiré de l'image floue de transition 30 entre deux pixels 18, la source lumineuse de transition 28 est excentrée par rapport à l'axe optique de la lentille 14 associée.

Outre la position excentrée de la source lumineuse de transition 28, il est aussi possible de jouer sur le positionnement longitudinal de la source lumineuse par rapport à la lentille 14 pour accentuer ou diminuer le flou de l'image floue de transition 30.

Pour plus de clarté, les images floues sont représentées à la figure 5 en traits interrompus qui symbolisent la limite au-delà de laquelle l'image floue n'éclaire sensiblement plus, tandis que les pixels 18 sont représentés en traits pleins.

L'image floue de transition 30 présente ainsi la forme d'un rectangle qui est délimité transversalement par des bords flous 32 qui s'estompent, c'est-à-dire dont l'éclairement lumineux diminue, proportionnellement à l'éloignement transversal du centre de l'image floue de transition 30.

Les bords adjacents 32 en vis-à-vis de deux images floues de transition 30 adjacentes s'estompent totalement, c'est-à-dire que l'éclairement lumineux tend vers zéro, sur un pixel 18 commun agencé entre les deux intervalles sombres 20 éclairés par lesdites images floues de transition 30, comme cela est illustré à la figure 5 et aux graphiques des figures 6 et 7.

Les graphiques des figures 6 et 7 ont été dessinés en correspondance verticale avec la figure 5 afin de faciliter la compréhension de l'invention.

L'image floue de transition 30 est projetée de manière que sa partie centrale la plus lumineuse éclaire l'intervalle sombre 20 associé avec un éclairement lumineux au plus équivalent à celui des pixels 18, par exemple d'environ 100 lux. L'image floue de transition 30 présente une hauteur verticale suffisante pour éclairer entièrement l'intervalle sombre 20 en donnant ainsi l'impression que le faisceau lumineux de route éclaire la route de façon homogène.

Cette caractéristique permet d'éviter l'impression désagréable donnée par l'éclairage non homogène en forme de grille produit par le faisceau lumineux émis par le dispositif d'éclairage 10 réalisé selon l'état de la technique, en d'autres termes, le faisceau lumineux émis par le dispositif d'éclairage 26 éclaire de façon homogène.

L'image floue de transition 30 s'estompe transversalement en chevauchant les pixels adjacents 18. Comme représenté aux figures 6 et 7, l'image floue de transition 30 s'estompe totalement avant d'atteindre le bord 22 opposé du pixel 18 qu'elle chevauche. Ainsi l'image floue de transition 30 n'éclaire qu'un unique intervalle sombre 20.

Comme représenté à la figure 7, l'éclairement lumineux de l'image floue de transition 30 diminue jusqu'à devenir inférieure à 1 lux à distance du bord opposé 22 du pixel 18 qu'elle chevauche. Dans l'exemple représenté aux figures 5 à 7, l'éclairement lumineux de l'image floue de transition 30 devient inférieur à 1 lux transversalement au milieu de chaque pixel 18 situé de part et d'autre de l'intervalle sombre 20 associé.

Deux images floues de transition 30 adjacentes se chevauchent ici sur un pixel 18 commun situé entre les deux intervalles sombres 20 éclairés par lesdites deux images floues de transition 30.

Le dispositif d'éclairage 26 comporte en outre deux sources lumineuses complémentaires 34 qui sont associées à des moyens de projection de manière à former des images floues d'extrémité 36 qui éclairent transversalement au-delà de chacune des extrémités transversales de l'alignement de pixels 18 en chevauchant le pixel 18 d'extrémité transversal associé et en s'estompant transversalement vers l'extérieur au-delà du pixel 18 d'extrémité transversal associé.

Les sources lumineuses complémentaires 34 sont formées par des diodes électroluminescentes similaires à celles employées pour les sources lumineuses principales 12 et de transition 28.

Les moyens de projection associés aux sources lumineuses complémentaires 34 sont formés par les moyens de projection 14 associés aux sources lumineuses de transition 28. Il s'agit ici des lentilles 14 associées au deux sources lumineuses principales 12 d'extrémité transversale. Ainsi, le dispositif d'éclairage 26 comporte peu d'éléments optiques et il est peu onéreux à fabriquer.

Selon une variante non représentée de l'invention, chaque source lumineuse principale, de transition ou complémentaire est associée à une lentille individuelle.

Les sources lumineuses d'extrémité 34 sont agencées selon les mêmes prescriptions que les sources lumineuses de transition 28 afin de produire une image floue d'extrémité 36 présentant un étalement transversal et un flou désiré.

Chaque image floue d'extrémité 34 présente transversalement en son milieu un éclairement lumineux sensiblement égal à celui du pixel 18 d'extrémité associé, par exemple 100 lux. Le milieu de l'image floue d'extrémité 34 est situé transversalement dans le prolongement du pixel d'extrémité associé 18 vers l'extérieur, comme cela est indiqué à la figure 7 par les deux courbes d'extrémité transversales indiquées par la référence 36.

Chaque image floue d'extrémité 36 est délimité transversalement par un bord vertical flou extérieur 38 et un bords vertical flou intérieur 32. Le bord intérieur 32 est superposé au pixel 18 d'extrémité transversale associé, tandis que le bord extérieur 38 est agencé à l'extérieur de l'alignement de pixels 18.

Ainsi, l'image floue d'extrémité 36 n'éclaire aucun intervalle sombre 20, mais prolonge l'éclairage du faisceau lumineux transversalement vers l'extérieur.

Ces images floues d'extrémité 36 permettent de conférer au faisceau lumineux des bords d'extrémité extérieur 38 flous. Le faisceau lumineux émis s'estompe ainsi progressivement transversalement vers les bas-côtés de la route au lieu d'être interrompu brutalement par une ligne nette. Ainsi le faisceau lumineux produit par le dispositif d'éclairage 26 présente le même aspect qu'un faisceau lumineux produit par un feu de route traditionnel produit par un projecteur équipé d'un réflecteur et d'une lampe à arc ou à filament.

L'image floue d'extrémité 36 présente ici le même profil d'éclairement lumineux que les images floues de transition 30 par rapport à une ligne de coupe transversale, comme indiqué à la figure 7.

Ainsi, lors de l'utilisation du dispositif d'éclairage 26, lorsqu'un véhicule adverse est détecté comme étant éclairé par un unique pixel 18 interférent, le pixel interférent 18 est éteint et les images de transition 30 ou d'extrémité 36 qui le chevauchent sont aussi éteintes. Ainsi, un trou d'obscurité est ménagé dans le faisceau lumineux de route pour éviter d'éblouir le conducteur du véhicule adverse. Ce trou d'obscurité, lorsqu'il est formé par l'extinction d'un pixel 18 intérieur, est délimité transversalement par les bords nets 22 des deux pixels 18 qui l'encadrent.

Lorsque le véhicule adverse est détecté comme étant à cheval sur deux pixels 18 adjacents, les deux pixels interférents 18 sont éteints ainsi que l'image floue de transition 30 correspondant à l'intervalle sombre 20 situé entre lesdits pixels interférents 18. Un trou d'obscurité est alors créé dans le faisceau lumineux de route.

Ce trou d'obscurité est cependant délimité transversalement par les deux images floues de transitions 30 ou d'extrémité 36 correspondant aux deux intervalles sombres 20 qui flanquent extérieurement les deux pixels interférents. Ainsi, contrairement au dispositif d'éclairage 10 réalisé selon l'état de la technique, le trou d'obscurité présente une largeur inférieure à celle des deux pixels interférents 18, permettant ainsi au conducteur du véhicule de voir une grande partie de la route éclairée sans pour autant éblouir le conducteur du véhicule adverse.

De plus, grâce aux images floues de transition et d'extrémité, le faisceau lumineux de route est sensiblement homogène.

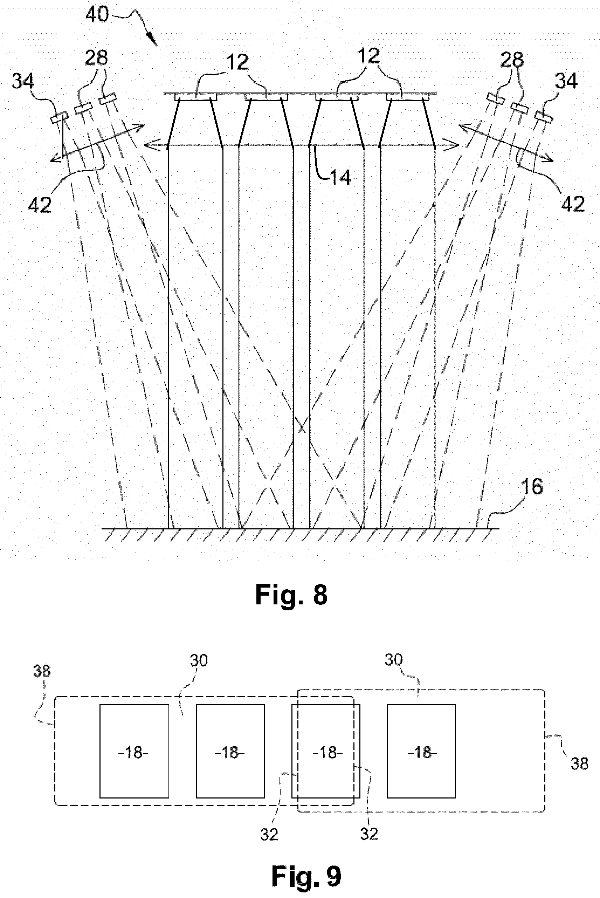

On a représenté à la figure 8 un dispositif d'éclairage 40 réalisé selon un deuxième mode de réalisation. Ce dispositif d'éclairage 40 est similaire au dispositif d'éclairage 10 réalisé selon l'état de la technique. Il comporte ainsi une unique lentille commune 14 pour projeter l'image des sources lumineuses principales 12.

Comme dans le premier mode de réalisation, le dispositif d'éclairage 40 comporte quatre sources lumineuses de transition 28 formées par des diodes électroluminescentes, et deux sources lumineuses d'extrémité 34 aussi formées par des diodes électroluminescentes.

Cependant, à la différence du dispositif d'éclairage 26 réalisé selon le premier mode de réalisation, les moyens de projections 42 associés aux sources lumineuses de transition 28 sont distincts des moyens de projection 14 associés aux sources lumineuses principales 12.

Les moyens de projections 42 associés aux sources lumineuses de transition 28 seront qualifiés « de transition » afin de les différencier des moyens de projections 14 associés aux sources lumineuses principales 12 qui seront dits « principaux ».

Ainsi, les sources lumineuses de transition 28 sont décalées transversalement par rapport à l'alignement de sources lumineuses principales 12. Elles sont ici divisées en deux groupes qui sont agencés transversalement de part et d'autre de l'alignement de sources lumineuses principales 12.

Selon une variante non représentée de l'invention, toutes les sources lumineuses de transition sont agencées transversalement d'un même côté de l'alignement de sources lumineuses principales.

Les moyens de projection de transition 42 sont formés par deux lentilles 42 dont chacune est associée à un groupe de sources lumineuses de transition 28.

Les images floues de transition 30 présentent les mêmes caractéristiques de positionnement et d'éclairement lumineux que les images floues de transition 30 produite par le dispositif d'éclairage 26 du premier mode de réalisation, comme représenté aux figures 5, 6 et 7. Les sources lumineuses de transition 28 sont agencées par rapport à la lentille de transition 42 de manière à obtenir les caractéristiques désirées.

Le dispositif d'éclairage 40 selon le deuxième mode de réalisation comporte aussi deux sources lumineuses complémentaires 34 pour former des images floues d'extrémité 36 comme cela est expliqué dans le premier mode de réalisation.

Avantageusement, les moyens de projection associés aux sources lumineuses complémentaires 34 sont formés par les moyens de projection de transition 42. Les sources lumineuses complémentaires 34 sont ainsi agencées par rapport aux lentilles de transition 42 de manière à obtenir des images floues d'extrémité 36 présentant les mêmes caractéristiques que dans le premier mode de réalisation.

Ce deuxième mode de réalisation permet ainsi d'adapter l'invention à un dispositif d'éclairage 10 réalisé selon l'état de la technique en ajoutant les sources lumineuses de transition 28 et complémentaire et les moyens de projection 42 associés.

Dans une variante applicable aux dispositif d'éclairage 26 et 40 des premier et deuxième modes de réalisation, le dispositif d'éclairage 26 ou 40, comporte au moins deux sources lumineuses de transition 28 produisant des images floues de transition 30 alignées transversalement dont chacune éclaire au moins un intervalle sombre 20 associé. Les bords 32 en vis-à-vis de deux images floues de transition 30 adjacentes s'estompent totalement dans un pixel 18 commun.

Dans l'exemple représenté à la figure 9, le dispositif d'éclairage ne comporte que deux sources lumineuses de transition dont chacune produit une image floue de transition 30, l'alignement de pixels 18 comportant encore trois intervalles sombres 20. Les images de transition 30 forment aussi les images floues d'extrémité. En effet, chaque image de transition 30 est délimitée transversalement par un bord intérieur qui est superposé à un pixel 18 et un bord extérieur 38 qui éclaire transversalement à l'extérieur dans le prolongement de l'alignement de pixels 18. Chaque image de transition 30 éclaire ici un côté associé de la route.

Les bords intérieurs 32 de chaque image floue de transition 30 sont superposés à un pixel 18 commun.

Chaque image floue de transition 30 est ainsi superposée à au moins un pixel dans sa totalité, en d'autres termes, chaque image floue de transition 30 englobe entièrement au moins un pixel 18. Ainsi, comme représenté à la figure 9, l'image floue de transition 30 de gauche permet d'éclairer entièrement deux intervalles sombres ainsi que le bas-côté gauche de la route.

Il s'agit bien entendu d'un exemple, et toutes les combinaisons sont possibles, par exemple les images floues agencés transversalement sur les côtés peuvent éclairer plusieurs intervalles sombres, tandis que dans l'axe de la route, c'est-à-dire à l'endroit présentant la plus grande probabilité de détection de véhicules adverses, on peut opter pour des images floues de transition chacune associée à un unique intervalle sombre.

Selon l'invention, le dispositif d'éclairage comporte une unique source lumineuse de transition dont l'image de transition est superposée à la totalité de l'alignement de pixels et qui s'estompe transversalement au-delà des pixels d'extrémité transversale de part et d'autre de l'alignement de pixels. On obtient ainsi un faisceau lumineux de route homogène. L'image floue de transition doit cependant être éteinte à chaque fois qu'un véhicule adverse est détecté, ce qui ne permet pas d'assurer un aspect globalement homogène du faisceau lumineux même lorsqu'un véhicule adverse est détecté comme c'est le cas dans les précédents modes de réalisation et variantes.

L'invention a été présentée avec un seul alignement de quatre sources lumineuses principales 12. On comprendra cependant que le nombre de sources lumineuses principales 12 peut varier. Par exemple le dispositif d'éclairage peut présenter un agencement matriciel de seize diodes électroluminescentes agencées en deux rangées transversales de huit diodes chacune.

De même, bien que sur les figures aient été représentées plus particulièrement des images de transition 30 floues et des images d'extrémité 36 floues, l'homme du métier pourra mettre en oeuvre l'invention en utilisant des images de transition 30 nettes et/ou des images d'extrémité 36 nettes, sans sortir du cadre de la présente invention.

## Revendications

1. Dispositif d'éclairage produisant un faisceau d'éclairage de type feu de route pour véhicule automobile qui comporte :
- une pluralité de sources lumineuses principales sélectivement activables qui sont agencées selon un alignement transversal, deux sources lumineuses principales adjacentes étant écartées transversalement ;
- des moyens optiques de projection (14)qui sont agencés de manière à projeter une image à l'infini de chaque source lumineuse principale, les images formant des pixels présentant chacun au moins un bord net, les pixels étant disjoints et alignés transversalement, deux pixels adjacents étant séparés transversalement par un intervalle sombre;
**caractérisé en ce qu'**il comporte une unique source lumineuse de transition dont l'image de transition est projetée à l'infini par des moyens optiques de projection associés, l'image de transition étant superposée à la totalité des pixels de l'alignement en éclairant entièrement la totalité des intervalles sombres.

2. Dispositif selon la revendication précédente, **caractérisé en ce que** ledit intervalle sombre présente une dimension transversale inférieure à la moitié de la dimension transversale de l'un des pixels adjacents à cet intervalle sombre.

3. Dispositif selon la revendication précédente, **caractérisé en ce que** ledit intervalle sombre présente une dimension transversale inférieure au quart de la dimension transversale de l'un des pixels adjacents à cet intervalle sombre.

4. Dispositif selon l'une quelconque des revendications 1 à 3, **caractérisé en ce qu'**il comporte deux sources lumineuses complémentaires qui sont associées à des moyens de projection de manière à former des images d'extrémité qui éclairent chacune dans le prolongement d'une extrémité transversale de l'alignement de pixels en chevauchant le pixel d'extrémité transversal associé et en s'estompant transversalement vers l'extérieur.

5. Dispositif selon l'une quelconque des revendications précédentes, **caractérisé en ce que** les moyens de projection associés des sources lumineuses de transition sont au moins en partie formés par les moyens de projection associés aux sources lumineuses principales.

6. Dispositif selon l'une quelconque des revendications 1 à 5, **caractérisé en ce que** les moyens de projections associés aux sources lumineuses de transition sont distincts des moyens de projection associés aux sources lumineuses principales.

7. Dispositif selon l'une quelconque des revendications précédentes, **caractérisé en ce que** les moyens de projection sont formés par au moins une lentille.

8. Dispositif selon l'une quelconque des revendications 1 à 6, **caractérisé en ce que** les moyens de projection sont formés par au moins un miroir.

9. Dispositif selon la revendication précédente, **caractérisé en ce qu'**une lentille individuelle est associée à chacune des sources lumineuses principales.

10. Dispositif selon selon l'une quelconque des revendications précédentes, **caractérisé en ce qu'**un miroir individuel est associée à chacune des sources lumineuses principales.

11. Dispositif selon l'une quelconque des revendications précédentes, **caractérisé en ce que** l'image de transition et/ou l'image d'extrémité est floue.

12. Dispositif selon l'une quelconque des revendications 1 à 10, **caractérisé en ce que** l'image de transition et/ou l'image d'extrémité est nette.

## Patentansprüche

1. Beleuchtungsvorrichtung, die ein Beleuchtungsstrahlenbündel des Fernlichttyps erzeugt, für Kraftfahrzeuge, die Folgendes umfasst:
- mehrere wahlweise aktivierbare Hauptlichtquellen, die in einer transversalen Anordnung angeordnet sind, wobei zwei benachbarte Hauptlichtquellen transversal beabstandet sind;
- optische Projektionsmittel, die in der Weise angeordnet sind, dass sie ein Bild jeder Hauptlichtquelle ins Unendliche projizieren, wobei die Bilder Pixel darstellen, die jeweils wenigstens einen scharfen Rand besitzen, wobei die Pixel voneinander verschieden sind und transversal ausgerichtet sind, wobei zwei benachbarte Pixel transversal durch ein Dunkelintervall getrennt sind;
**dadurch gekennzeichnet, dass** sie eine einzige Übergangslichtquelle umfasst, deren Übergangsbild durch zugeordnete optische Projektionsmittel ins Unendliche projiziert wird, wobei das Übergangsbild der Gesamtheit der Pixel der Anordnung überlagert ist und die Gesamtheit der Dunkelintervalle vollständig beleuchtet.

2. Vorrichtung nach dem vorhergehenden Anspruch, **dadurch gekennzeichnet, dass** das Dunkelintervall eine transversale Abmessung besitzt, die kleiner als die Hälfte der transversalen Abmessung eines der zu diesem Dunkelintervall benachbarten Pixel ist.

3. Vorrichtung nach dem vorhergehenden Anspruch, **dadurch gekennzeichnet, dass** das Dunkelintervall eine transversale Abmessung besitzt, die kleiner als ein Viertel der transversalen Abmessung eines der zu diesem Dunkelintervall benachbarten Pixel ist.

4. Vorrichtung nach einem der Ansprüche 1 bis 3, **dadurch gekennzeichnet, dass** sie zwei komplementäre Lichtquellen umfasst, die Projektionsmitteln zugeordnet sind, derart, dass Endbilder erzeugt werden, die jeweils in der Verlängerung eines transversalen Endes der Anordnung von Pixeln beleuchten, indem sie mit dem zugeordneten transversalen Endpixel überlappen und transversal nach außen unscharf werden.

5. Vorrichtung nach einem der vorhergehenden Ansprüche, **dadurch gekennzeichnet, dass** die zugeordneten Projektionsmittel der Übergangslichtquellen wenigstens teilweise durch Projektionsmittel gebildet sind, die den Hauptlichtquellen zugeordnet sind.

6. Vorrichtung nach einem der Ansprüche 1 bis 5, **dadurch gekennzeichnet, dass** die Projektionsmittel, die den Übergangslichtquellen zugeordnet sind, von den Projektionsmitteln, die den Hauptlichtquellen zugeordnet sind, verschieden sind.

7. Vorrichtung nach einem der vorhergehenden Ansprüche, **dadurch gekennzeichnet, dass** die Projektionsmittel durch wenigstens eine Linse gebildet sind.

8. Vorrichtung nach einem der Ansprüche 1 bis 6, **dadurch gekennzeichnet, dass** die Projektionsmittel durch wenigstens einen Spiegel gebildet sind.

9. Vorrichtung nach dem vorhergehenden Anspruch, **dadurch gekennzeichnet, dass** jeder der Hauptlichtquellen eine einzelne Linse zugeordnet ist.

10. Vorrichtung nach einem der vorhergehenden Ansprüche, **dadurch gekennzeichnet, dass** jeder der Hauptlichtquellen ein einzelner Spiegel zugeordnet ist.

11. Vorrichtung nach einem der vorhergehenden Ansprüche, **dadurch gekennzeichnet, dass** das Übergangsbild und/oder das Endbild verschwommen sind.

12. Vorrichtung nach einem der Ansprüche 1 bis 10, **dadurch gekennzeichnet, dass** das Übergangsbild und/oder das Endbild scharf sind.

## Claims

1. Lighting device for producing a lighting beam of the high-beam type for a motor vehicle, which includes:
- a plurality of selectively activatable main light sources that are arranged in transverse alignment, two adjacent main light sources being spaced apart transversely;
- optical projecting means that are arranged so as to project an image of each main light source to infinity, the images forming pixels each having at least one clear edge, the pixels being separate and aligned transversely, two adjacent pixels being separated transversely by a dark interval;
**characterized in that** it includes a single transition light source the transition image of which is projected to infinity by associated optical projecting means, the transition image being superposed on the entirety of the aligned pixels and entirely illuminating all of the dark intervals.

2. Device according to the preceding claim, **characterized in that** said dark interval has a transverse dimension smaller than half the transverse dimension of one of the pixels adjacent to this dark interval.

3. Device according to the preceding claim, **characterized in that** said dark interval has a transverse dimension smaller than one quarter of the transverse dimension of one of the pixels adjacent to this dark interval.

4. Device according to one of Claims 1 to 3, **characterized in that** it includes two complementary light sources that are associated with projecting means so as to form end images that each illuminate in the extension of a transverse end of the aligned pixels, and overlap the associated transverse end pixel, and fade transversely toward the exterior.

5. Device according to one of the preceding claims, **characterized in that** the projecting means associated with the transition light sources are at least partially formed by the projecting means associated with the main light sources.

6. Device according to one of Claims 1 to 5, **characterized in that** the projecting means associated with the transition light sources are distinct from the projecting means associated with the main light sources.

7. Device according to one of the preceding claims, **characterized in that** the projecting means are formed by at least one lens.

8. Device according to one of Claims 1 to 6, **characterized in that** the projecting means are formed by at least one mirror.

9. Device according to the preceding claim, **characterized in that** an individual lens is associated with each of the main light sources.

10. Device according to one of the preceding claims, **characterized in that** an individual mirror is associated with each of the main light sources.

11. Device according to one of the preceding claims, **characterized in that** the transition image and/or the end image is blurry.

12. Device according to one of Claims 1 to 10, **characterized in that** the transition image and/or the end image is clear.
